# EUROPEAN PATENT APPLICATION

(11) **EP 0 535 472 A2**
(43) Date of publication of application: **07.04.1993**
(21) Application number: 92116029.7
(22) Date of filing: 18.09.1992
(51) Int. Cl.: B60Q 1/115

(54) **A light projecting angle adjusting device for a head lamp of a vehicle**

(30) Priority: 30.09.1991 JP 251160/91
(71) Applicant: Mazda Motor Corporation, Aki-gun Hiroshima-ken (JP)
(72) Inventor: Yamanaka, Hidenori, Hiroshima-shi, Hiroshima Pref. (JP); Tsuruta, Shinji, Hiroshima-shi, Hiroshima-Pref. (JP)
(74) Representative: Weber, Otto Ernst, Dipl.-Phys.

(57) **Abstract**

The object of the invention is to provide a light projecting angle adjusting device for a headlamp of a vehicle (1) which has a simple structure, is compact and reduces the number of the components and its cost. This object is achieved by driving a motor (2) in accordance with the setting signal from a light projecting angle setting means (12) for setting the light projecting angle of the left side headlamp (2L) and the right side headlamp (2R) of the vehicle; changing the tilt of the left side and the right side headlamp (2L,2R) of a vehicle (1), which is tiltable to the longitudinal direction of the vehicle body (1), to the longitudinal direction of the vehicle body (1) by a light projecting angle changing rod (23); adjusting the light projecting angle of the right side and of the left side headlamp (2R,2L) of the vehicle to the light projecting angle adjusted with the aforesaid setting means (12); comparing with a control circuit (22) of the motor the signal of the light projecting angle of the left side headlamp and the right side headlamp (2L,2R) detected by an apparatus for detecting the current light projecting angle (VR1) with the light projecting angle setting signal (VR2) generated from said light projecting angle setting means (12); driving the motor (21) until the two signals coincide; and changing by an initial light projecting angle setting means (12) the signal generated from said light projecting angle detecting means (VR1), while said light projecting angle setting means (12) is adjusted to a reference light projecting angle position, thus adjusting the light projecting angle of the left side headlamp and right side headlamp (VR1,VR2) into the predetermind aiming value.

## Description

### BACKGROUND OF THE INVENTION

The present invention relates to a light projecting angle adjusting device for a headlamp of a vehicle which corrects the light projecting angle of the headlamp which is disturbed by the loading condition in accordance with the number of passengers or/and the loading condition of the vehicle.

### DESCRIPTION OF THE PRIOR ART

The light projecting angle of a headlamp for a vehicle is adjusted to the predetermined initial aiming value at the time when the headlamps are installed into a supporting components such as lamp housing before use or in examination, and in general, the user of the vehicle drives the car in the state that the light projecting angle is fixed to the initial aiming value.

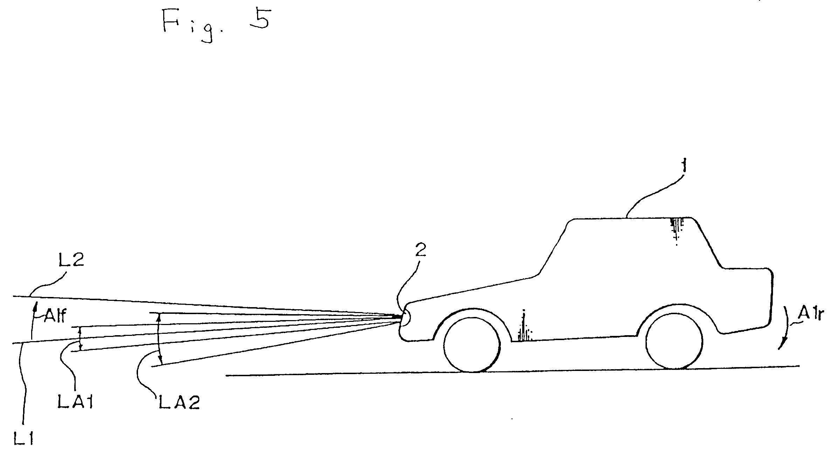

In this connection, when the light projecting angle is fixed to a certain level of angle, as shown in the Figure 5, if the number of passenger getting in the vehicle 1 increases or the weight of load increases, the rear portion of the vehicle 1 goes downward as shown by the arrow Air, and the light projecting angle goes upward from the initial aiming value L1 to the light projecting angle L2 as shown by the arrow A1f.

Thus, if the light projecting angle of the headlamps 2 goes upward, the proper area in front of the vehicle 1 may not always be lighted and/or dazzle the driver in other vehicle, and as a result, it may cause uncertainty in the safety of vehicle.

Therefore, so as to secure the safety of the vehicle, more particularly, to prevent the light projecting angle goes upward, there is trend to make it legal obligation that providing the light projecting angle adjusting device which corrects the light projecting angle in accordance with the number of the passengers of the vehicle or/and the loading condition of the vehicle.

This kind of the light projecting angle adjusting device usually provides an executive initial light projecting angle adjusting device for adjusting the light projecting angle into a predetermined initial aiming value when the headlamp is installed into a lamp housing before use and/or in examination.

For example, a prior art, the Japanese laid-open patent publication No. 1-282046 discloses an initial light projecting angle adjusting device explained below .

The light projecting angle adjusting device of the prior art provides an executive mechanism for the light projecting angle adjustiment which consists of a light projecting angle changing rod which is displaced by output from a motor and transmits a linear displacement of itself, besides the structure for the initial adjustment in which the rod is displaced to its axial direction by manual operation of a light projecting angle changing shaft.

Since the light projecting angle adjusting device stated in the prior art requires an exclusive structure for adjusting the initial light projecting angle to the initial aiming value of the light projecting angle besides the structure for transmitting the output from the motor to the light projecting angle changing rod, it causes increase in the number of the components, higher cost, complicated structure, and it makes the device bigger.

The aims of the present invention are to provide a light projecting angle adjusting device which has a simple compact structure, and to reduce the number of the components and its cost.

### SUMMARY OF THE INVENTION

According to the present invention, there is provided a light projecting angle adjusting device for a headlamp of a vehicle which adjusts the light projecting angle into the initial aiming value in accordance with the loading condition of the vehicle and does not require exclusive structure for adjustment. Said device comprising a light projecting angle detecting means for detecting the current light projecting angle of the headlamp and for generating a current light projecting angle signal, a light projecting angle setting means for setting the light projecting angle into multiplex levels in accordance with the pitching angle of the vehicle and for generating a light projecting angle setting signal, an initial light projecting angle setting means for correcting a signal for driving degree of the drive means for the ration of the initial adjusting value and generating an initial setting ration correcting signal, a control means for controlling the driving degree of the drive means to compare a target value set based upon the light projecting angle setting signal and the initial light projecting angle setting signal and a signal of the tilt angle of the headlamp that drives the drive means until the two signals coincide, and a drive means for driving a motor in accordance with the control signal and displace a light projecting angle changing rod.

According to the present invention, since the light projecting angle of the headlamps is adjusted by changing the tilt of the headlamps with the rod for changing the light projecting angle by operating the initial light projecting angle adjusting means, the light projecting angle adjusting device does not require an executive structure, and the present invention can provide a light projecting angle adjusting device which has a simple and compact structure and is compact, and reduces the number of the components and its cost.

### BRIEF DESCRIPTION OF THE DRAWINGS

Figure 1: a block diagram of an embodiment of a light projecting angle adjusting device in accordance with the present invention.
Figure 2: an explanation on the mechanism of the light projecting angle adjusting device in accordance with the present invention.
Figure 3: a sectional view along B-B line of the Figure 2.
Figure 4: an explanation on the changing amount of the stroke of the rod for changing the light projecting angle.
Figure 5: an explanation on the initial aiming value of the light projecting angle and the light projecting angle set by the adjusting device.

### DETAILED DESCRIPTION OF THE INVENTION

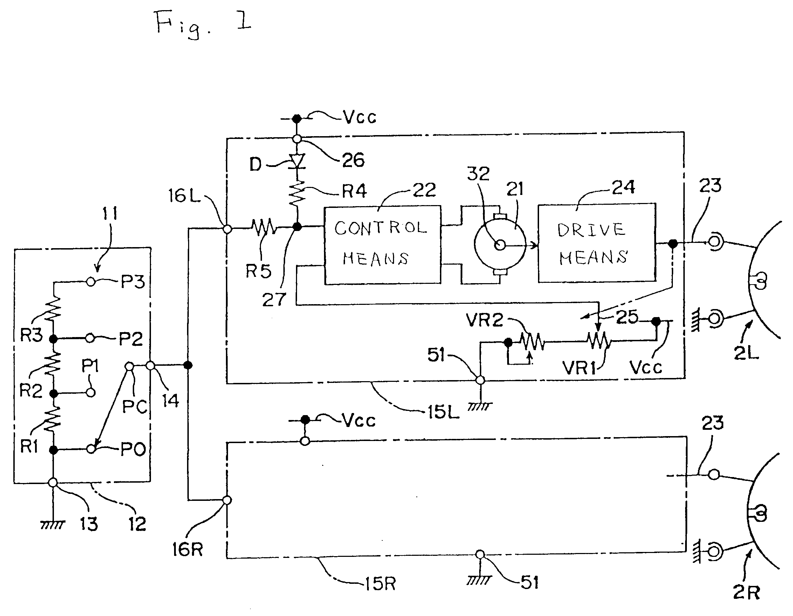

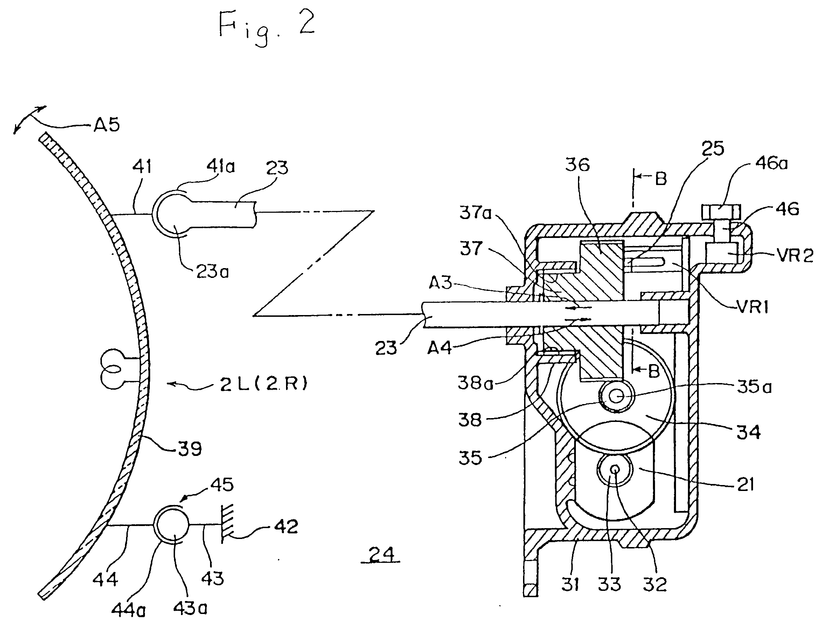

The light projecting angle adjusting device for a headlamp of a vehicle shown in the Fig. 1 and Fig. 2 provides a light projecting angle setting apparatus 12 having a light projecting angle changing switch 11 for switching the light projecting angle of the left side headlamp 2L and the right side headlamp 2R of a vehicle 1 shown in the Fig. 5 into four predetermined levels of angle, namely, position 0, position 1, position 2, and position 3.

Said light projecting angle setting apparatis 12 is so provided in front of the driver seat that operatable by the driver.

Of the light projecting angle changing switch 11, a positon 0 connection P0 is connected to an earth through an earth terminal 13 and a resistor R1 is connected between said position 0 connection P0 and the position 1 connection P1.

Further, a resistor R2 is connected between said position 1 connection P1 and a position 2 connection P2, and still further, a resistor R3 is connected between said position 2 connection P2 and a position 3 connection P3 in the same mannar.

Selection of the position between the position 0 through 3 is made by the light projecting angle setting apparatus 12 in the way mentioned hereinafter.

The position 0 is selected when the driver is seated at the driver seat of the vehicle 1 or/and when the driver and a passenger is seated at the driver seat and front passenger seat respectively.

When the position 0 is selected, the light projecting angle of the left side headlamp 2L is same as the initial aiming value which is set at the time the headlamp 2L is installed into the lamp housing before its use or in its examination.

The position 1 is selected when, in addition to the occupation of the driver seat and the front passenger seat, at least one passenger is seated at the rear passenger seat.

Further, said position 2 is selected when all of the seats are occupied by the passengers and the driver.

Still further to above, said position 3 is selected when, in addition to the occupation of all of the seats by the passengers and the driver, load is loaded in the trunk of the vehicle.

The light projecting angle setting signal generated from an output terminal which is connected to a variable connection PC of the light projecting angle changing switch 11 is input into a input terminal 16L of a left side light projecting angle control unit 15L for the left side headlamp 2L and a input terminal 16R of a right side light projecting angle control unit 15R for the right side headlamp 2R.

Since the left side light projecting angle control unit 15L and the right side light projecting angle control unit 15R have the same structure and same function, only the elements of the left side light projecting angle control unit 15L is shown in the Fig. 1 and the explanation on the right side light projecting angle control unit 15R is omitted.

The left side light projecting angle control unit 15L provides
a motor 21 for driving the left side headlamp 2L;
a control circuit 22 for controlling rotational amount of said motor 21;
a driving structure 24 for converting the output from said motor 21 into the displacement of a rod 23 for changing the light projecting angle connected to the left side headlamp 2L;
a variable resistor for detecting the current light projecting angle VR1 (here in after VR1) having a slidable contact 25 which generates a signal corresponding to the light projecting angle of the left side headlamp 2L, and said slidable contact 25 slides together with said rod; and
a variable resistor for setting the initial light projecting angle VR2 (here in after VR2) for correcting the current light projecting angle value detected at the VR1 into the actual control value.

Between the input terminal 16L of said control unit 15L and a connecting terminal 26 of a power supply line Vcc connected to a battery mounted on the vehicle (not shown in the figure), a diode D, a resistor R4 and a resistor R5 are connected in series there between.

The light projecting angle setting signal generated from the variable connection PC of the light projecting angle changing switch 11 input into the control circuit 22 of said control unit 15L through the connection 27 of said resistor R4 and resistor R5.

Further to above, the signal corresponding to the light projecting angle generated from the slidable contact 25 of the VR1 input into said control circuit 22.

Said control circuit 22 compares said light projecting angle setting signal generated from the variable connection PC of the light projecting angle changing switch 11 with the signal corresponding to the light projecting angle generated from the slidable contact 25 of the VR1 and amplify the difference to drive the motor 21.

The motor 21 is connected to the output side of the control circuit 22, and the rotation of the output axle 32 of the motor 21 is converted to linear displacement of the rod 23 by the driving structure 24.

Said driving structure 24 has the structure shown in the Figure 2.

Namely, inside of the housing 31, said driving structure 24 having a pinion gear 33 fixed to an output axle 32 of the motor 21, a gear 34 which engages with the pinion gear 33, a worm 35 fixed to the axle 35a of the gear 34, a worm wheel 36 engaging with said worm 35, and a light projecting angle adjusting rod 23 which is fixed to the worm wheel 36 penetrately through an axle thereof.

On said worm wheel 36, an oval projection 37 which has smaller diameter than the worm wheel 36 extends from a headlamp side surface thereof toward the direction the headlamp is provided, and the projection 37, more particularly the thread portion 37a formed on the outer surface thereof engages with another thread portion 38a formed on the inner surface of a cylinder shaped projection 38 which projects inwardly of the housing 31 from the inner surface inside the housing 31.

Accordingly, as directed with the arrow A3 or the arrow A4, said worm wheel 36 is linearly displaced when rotation of the output axle 32 of the motor 21 is transmitted through the pinion gear 33, the gear 34 and the worm 35 to the worm wheel 36 and then, said worm wheel 36 is driven by the action of the thread portion 37a on the projection 37 of the worm wheel 36 and the other thread portion 38a on the cylinder shaped projection 38 on the inner side of the housing 31.

On the worm wheel 36, the rod for changing the light projecting angle 23 is fixed penetrately through its axial portion.

A sphere 23a is formed on one end of the rod 23, and a cap structure 41a provided on one end of the connecting component 41 fixed to the upper portion behind the reflector 39 of the headlamp 2L put on to the sphere 23a, and accordingly, the sphere 23a is functionally connected to the reflector 39 of the headlamp 2L.

The headlamp 2L is supported at the lower portion behind the reflector 39 in the condition that the headlamp is tiltable to the longitudinal direction of the vehicle body 42 as directed by the arrow A5, by two pairs of tilt supporting members 45 (In the Figure 2, only a pair of the tilt supporting member 44 is shown.) consistes of a body side supporting member 43 fixed to the vehicle body 42 which has a sphere 43a at one end thereof and a headlamp side supporting member 44 which functionally connects to the sphere 43a of the body side supporting member 43 at the cap structure 44a formed at one end thereof and receiving the sphere 43a.

When the worm wheel 36 is linearly displaced by its rotation, the rod for changing the light projecting angle 23 changes its projecting length from the housing 31 toward the connection component 41 provided at the headlamp 2L.

Due to the mechanism explained above, the tilt of the headlamp to the longitudinal direction of the vehicle body 42 is changed and the light projecting angle of the headlamp 2L is adjusted.

Inside of the housing 31 of said driving structure 24, the VR1 and the VR2 of the left side headlamp 2L are contained.

The VR1 is a variable resistor having slidable contact 25 slides linearly.

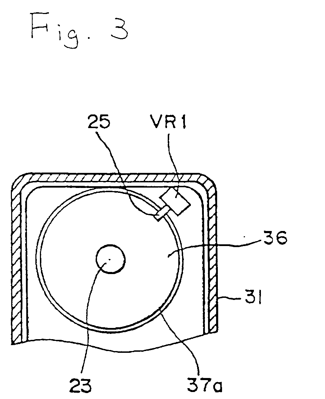

Said slidable contact 25 is biased toward the surface on the other side of the projecting direction of the projection 37 by bias means (not shown in the figure) such as a coil spring or the like all the time. (See Figure 3)

By the above structure, said slidable contact 25 changes its position accompanied with the linear displacement of the worm wheel 36.

Said VR1 is connected to the power supply line Vcc connected to the battery mounted on the vehicle at its one end, and the VR2 is connected to between the other end of said resistor VR1 and an earth terminal 51 of the left side light projecting angle control unit 15L.

Accordingly, the potential of said VR2 at its one end is the potential Vcc of said power supply line Vcc, and the potential of the other end of VR2 is defined in the manner that divide the potential of the power supply line Vcc by the resistance value between the ends of the VR1 (variable by adjustment) and that of the VR2.

The slidable contact 25 of said VR1, corresponding to its positioning, is variable between these two potential.

A signal corresponding to the position of the rod 23 is output from the slidable contact 25 of said VR1.

According to the structure explained above, when the variable connection PC of the light projecting angle changing switch 11 is switched into either one of four levels of adjusting positions, namely position 0 connection P0, position 1 connection P1 position 2 connection P2 and position 3 connection P3, the control circuit 22 of the left side light projecting angle control unit 15L compares the light projecting angle detecting signal detected by the slidable contact 25 the VR1 with the light projecting angle setting signal output from the light projecting angle setting apparatus 12, and drives the motor 21 to the direction the difference of two signals becomes smaller and continue to drive the motor 21 until the signals coincide.

The output of the motor 21 is transmitted to the pinion gear 33, the gear 34, worm 35 and worm wheel 36 shown in the Figure 2.

The linear displacement of the rod for changing the light projecting angle 23 changes the thrusting amount from the housing 31 and the tilt of the reflector 39 of the headlamp 2L is adjusted.

Wherein, by the VR2, as explained hereinafter, if the light projecting angle of the left side headlamp 2L is same as the initial aiming value, the light projecting angle of the headlamp 2L is adjusted to the level of position which is selected at the light projecting angle changing switch 11.

Namely, by the switching of the variable connection PC of said light projecting angle changing switch 11 between the position 0 connection P0 and the position 3 connection P3, the light projecting angle is adjusted in the horizontal direction of the vehicle body 42 between the range LA2, for example, from (-0.28) degree to (-1.43) degree. (See the Fig. 5)

As shown in the Figure 1, to adjust the initial light projecting angle to the initial aiming value, after installing the light projecting angle adjusting device to the vehicle body, switch the variable connection PC of the light projecting angle changing switch 11 of the light projecting angle determining device 12 to the position 0 connection P0. In this state, when the resistance value is adjusted by rotating the cap portion 46a of the shaft 46 of the VR2 shown in the Figure 2, with a driver (not shown in the figure), then the signal outputs from the slidable contact 25 of the VR1 is changed.

Since the control circuit 22 of the left side light projecting angle control unit 15L drives the motor 21 by detection of the change of this signal, the light projecting angle is adjusted to the predetermined angle of the initial aiming value by controlling the resistance value of the VR2.

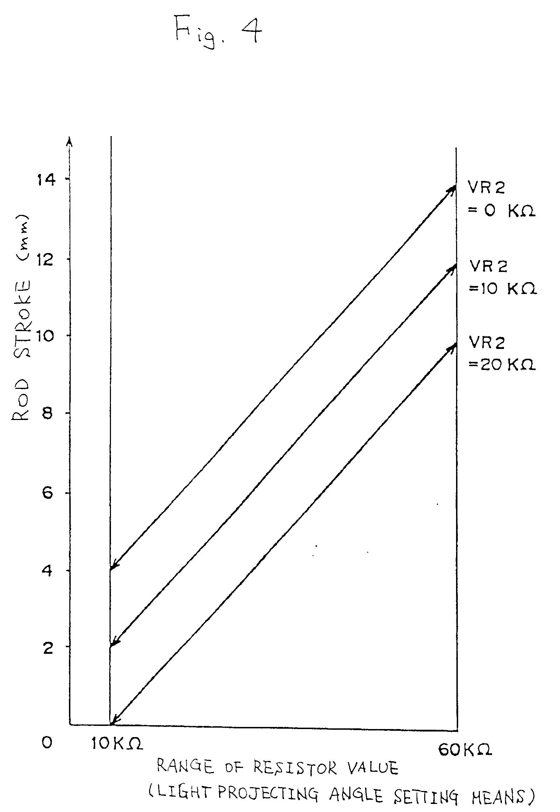

In the above mentioned embodiment, as shown in the Figure 4, when the position of the light projecting angle changing switch 11 is changed and the resistance between the variable connection PC and the earth is set between 10 kilo-ohm and 60 kilo-ohm, if the resistance of the VR2 is 0 ohm, the stroke of the rod 23 is changed between 4 millimeter and 14 millimeter, if the resistance of the VR2 is 10 kilo-ohm, the stroke of the rod 23 is changed between 2 millimeter and 12 millimeter, and if the resistance of the VR2 is 20 kilo ohm, the stroke of the rod 23 is changed between 0 millimeter and 10 millimeter.

Accordingly, by controlling the resistance of the VR2, the light projecting angle of the headlamp 2L is adjusted to the initial aiming value. The initial aiming value is set for example, within the range LA1 (see the Figure 5) from (-0.58) degree to (-0.85) degree in the horizontal direction.

The light projecting angle of the right side headlamp 2R is also be adjusted in the same manner.

Thus, in the above mentioned embodiment, by controlling the resistance of the VR2, the initial light projecting angle is easily adjusted to the initial aiming value electrically without using complicated device.

In the above embodiment, the structure for driving the rod for changing the light projecting angle 23 is able to be replaced with, for example, a gear train consists of a pinion gear, a gear , and a rack provided at the rod.

Instead of the above embodiment, the detection of the current light projecting angle can be done by detecting pitching angle of the vehicle.

Further, the variable connection PC structure can be replaced with a variable resistor VR3 so as to set the target light projecting angle continuously.

Further more, in the above embodiment, the headlamps are tiltably supported at the lower portion or the reflector 39, and connects the rod 23 to the upper portion of the reflector 39, however, the operation is also carried out by supporting said headlamp at the upper portion of the reflector 39, and connects the rod 23 to the lower portion of said reflector 39.

And still further, the operation is also be carried out even by moving the reflector 39 only, and fix the lamp portion of the headlamp to the vehicle.

Needless to say, the present invention is able to apply not only for a vehicle shown in the Figure 5, but also any kind of vehicle , a track for loading, for example.

## Claims

1. A light projecting angle adjusting device for a headlamp of a vehicle comprising:
a light projecting angle detecting means for detecting the current light projecting angle of the headlamp and for generating a current light projecting angle signal,
a light projecting angle setting means for setting the light projecting angle into multiplex levels in accordance with the pitching angle of the vehicle and for generating a light projecting angle setting signal,
an initial light projecting angle setting means for correcting a signal for driving degree of the drive means for the ration of the initial adjusting value and generating an initial setting ration correcting signal,
a control means for controlling the driving degree of the drive means so compare a target value set based upon the light projecting angle setting signal and the initial light projecting angle setting signal and a signal of the tilt angle of the headlamp that drives the drive means until the two signals coincide, and
a drive means for driving a motor in accordance with the control signal and displace a light projecting angle changing rod.

2. A light projecting angle adjusting device for a headlamp of a vehicle recited in the claim 1, wherein the initial light projecting angle setting means so corrects the value of the light projecting angle setting means that it determines the target value and the corrected value is compared to the current light projecting angle which determines the tilt angle of the headlamp.

3. A light projecting angle adjusting device for a headlamp of a vehicle recited in the claim 1, wherein the initial light projecting angle setting means so corrects the value of the current light projecting angle that determines the tilt angle of the headlamp and the corrected value is compared to the value set at the light projecting angle setting means.

4. A light projecting angle adjusting device for a headlmap of a vehicle recited in the claim 1, wherein the current light projecting angle is detected by a variable resistor VR1 which resistance is determined by the projecting degree of the light projecting angle changing rod.

5. A light projecting angle adjusting device for a headlamp of a vehicle recited in the claim 1, wherein the control value of the light projecting angle setting means is set by changing the variable connection which is operated by the driver.

6. A light projecting angle adjusting device for a headlamp of a vehicle recited in the claim 1, wherein the control value of the light projecting angle setting means is set by changing the variable connection which is automatically operated in accordance with the detection of the pitching angle of the rear portion of the vehicle.

7. A light projecting angle adjusting device for a headlamp of a vehicle recited in the claim 1, wherein the control value of the light projecting angle setting means is continuously variable .

8. A light projecting angle adjusting device for a headlamp of a vehicle recited in the claim 1, wherein the drive means transmits the output of the motor through gear parts and adjusts the tilt angle of the headlamp by projecting the light projecting angle changing rod.

9. A light projecting angle adjusting device for a headlamp of a vehicle recited in the claim 1, wherein the drive means transmits the output of the motor through gear parts and adjusts the tilt angle of the headlamp by using rack mechanism.

10. A light projecting angle adjusting device for a headlamp of a vehicle recited in the claim 1, wherein the light projecting angle changing rod of the drive means projects toward either the upper portion or the lower portion of the reflector of the headlamp.
